# EUROPÄISCHE PATENTSCHRIFT

(11) **EP 2 766 950 B1**
(45) Veröffentlichungstag und Bekanntmachung des Hinweises auf die Patenterteilung: **13.07.2016**
(21) Anmeldenummer: 12775616.1
(22) Anmeldetag: 02.10.2012
(51) Int. Cl.: H01M 10/46, H01M 10/0525, H01M 10/42, H01M 10/44, H01M 10/48, H01M 10/637, H02J 7/00

(54) **LITHIUM-IONEN-BATTERIE MIT ÜBERSTROMSCHUTZEINRICHTUNG**
LITHIUM-ION BATTERY COMPRISING OVERCURRENT PROTECTION DEVICE
BATTERIE LITHIUM-IONS AVEC PROTECTION CONTRE LES SURINTENSITÉS

(30) Priorität: 10.10.2011 DE 102011115550
(43) Veröffentlichungstag der Anmeldung: 20.08.2014
(73) Patentinhaber: Audi AG, 85045 Ingolstadt (DE)
(72) Erfinder: VERGOSSEN, David, 85049 Ingolstadt (DE)
(74) Vertreter: Herbst, Matthias Heinz
(86) Internationale Anmeldenummer: PCT/EP2012/004121
(87) Internationale Veröffentlichungsnummer: WO 2013/053445

(56) Entgegenhaltungen:
- EP-A2- 0 880 214
- WO-A1-2011/003924
- JP-A- 2004 031 268
- US-A1- 2003 071 523
- US-A1- 2005 156 566
- US-A1- 2012 135 296
- US-A1- 2012 286 578

## Beschreibung

Die Erfindung betrifft eine Lithium-Ionen-Batterie, insbesondere für ein Fahrzeug, mit einer Mehrzahl von in parallelen Strängen angeordneten Zellen, wobei jeder Strang mehrere Zellen aufweist, sowie einer Überstromschutzeinrichtung, mit den Merkmalen des Anspruchs 1.

Eine derartige Lithium-Ionen-Batterie ist aus der WO 2011/003924 A1 bekannt. Einzelne Batteriezellen sind in Reihe in Strängen angeordnet, die sich matrixartig mit Querzweigen kreuzen, in denen Überstromschutzreinrichtungen angeordnet sind, die als Schmelzsicherungen oder als PTC-Widerstände ausgebildet sein können.

In ähnlicher Weise offenbart die EP 0880214 A2 eine Schutzschaltung für eine Batterieeinheit, bei der Sicherungen vorgesehen sind, um bei einem zu hohen Strom einen Stromkreis zu unterbrechen.

Lithium-Ionen-Batterien sollen zukünftig als Starterbatterie zum Anlassen eines Verbrennungsmotors in Kraftfahrzeugen eingesetzt werden und die derzeit üblicherweise verwendeten 12 Volt Blei-Säure-Starterbatterien oder AGM-Batterien ersetzen. Beim Kaltstart eines Verbrennungsmotors müssen kurzzeitig sehr hohe impulsförmige Ströme geliefert werden. Gleichzeitig soll der Spannungseinbruch an den Batteriepolen möglichst gering sein. Die Lastströme bei Starterbatterien sind kurzzeitig wesentlich höher als bei Traktionsbatterien, der Startstrom kann eine Größenordnung von 1000 Ampere oder mehr erreichen.

Das Anlassen eines Verbrennungsmotors mittels des Anlassers bei Minusgraden und einer nur teilweise geladenen Lithium-Ionen-Batterie ist ein kritischer Zustand. Für einen erfolgreichen Startvorgang ist es wichtig, dass die Lithium-Ionen-Batterie in der Lage ist, den Strom zu liefern, der zum Aufbringen des Losreißmomentes des Anlassers erforderlich ist. Dieser Strom muss auch bei Minusgraden geliefert werden, ohne dass dabei die an den Polen der Lithium-Ionen-Batterie zu messende Klemmenspannung unter 6 Volt sinkt. Ein Einbruch der Spannung unter 6 Volt würde dazu führen, dass im Fahrzeug enthaltene Steuergeräte nicht mehr einwandfrei funktionieren. Es ist daher wichtig, dass der Innenwiderstand einer Lithium-Ionen-Batterie möglichst gering ist.

Es ist bereits vorgeschlagen worden, eine Lithium-Ionen-Batterie mit einer Sicherungen umfassenden Überstromschutzeinrichtung zu versehen, um die Folgen interner oder externer Kurzschlüsse zu begrenzen. Ein interner Kurzschluss kann beispielsweise bei einem Fahrzeugaufprall entstehen, bei dem die Batterie derart verformt wird, dass die Zellen sich gegeneinander eindrücken oder anders mechanisch beschädigen. Ebenso könnte ein anderes Metallteil in die Batterie gedrückt werden. Durch eine solche mechanische Deformation können Kurzschlüsse zwischen einzelnen Zellen entstehen. Bestimmte Typen von Lithium-Ionen-Zellen neigen dazu, elektrisch leitende Verbindungen (Dendriten) zu bilden, die zu leichten Kurzschlüssen innerhalb einer Zelle und somit innerhalb der Lithium-Ionen-Batterie führen können. Externe Kurzschlüsse hingegen sind bedingt durch Kurzschlüsse an den Klemmen oder Polen der Lithium-Ionen-Batterie. Kurzschlüsse innerhalb der Lithium-Ionen-Batterie können zu einer Überhitzung oder zu einem thermischen Durchgehen der Zellen führen. Diese Vorgänge können im schlimmsten Fall zu einer Explosion oder zu einer explosionsähnlichen Reaktion einzelner betroffener Zellen oder im Rahmen einer Kettenreaktion auch zu einer explosionsähnlichen Zerstörung der gesamten Lithium-Ionen-Batterie führen.

Bei einem internen Kurzschluss einer Zelle fließt die Energie der direkt benachbarten Zellen in die defekte Zelle. Bei einer Lithium-Ionen-Batterie, die mehrere parallele Stränge von Zellen aufweist, wobei jeder Strang wiederum mehrere Zellen umfasst, sind die Zellen matrixartig angeordnet und mit einander verschaltet, daher wird eine defekte oder kurzgeschlossene Zelle von allen in der Nähe liegenden Zellen gespeist.

Um die durch Kurzschlüsse verursachten Gefahren zu verringern, ist in der US 2008/0241667 A1 vorgeschlagen worden, jeweils Kathode und Anode aller Zellen eines Strangs mit Hilfe von Bonddrähten elektrisch mit einer Äquipotentialebene zu verbinden, wodurch die einzelnen Zellen parallel geschaltet werden. Die Bonddrähte dienen dabei als Überstromschutzeinrichtung und wirken wie Schmelzsicherungen. Dazu weist eine mit Öffnungen versehene Metallplatte Bonddrähte auf, die an einem Ende mit Batteriezellen verbunden sind. Die Bonddrähte werden durch die Öffnungen in der Metallplatte herausgeführt.

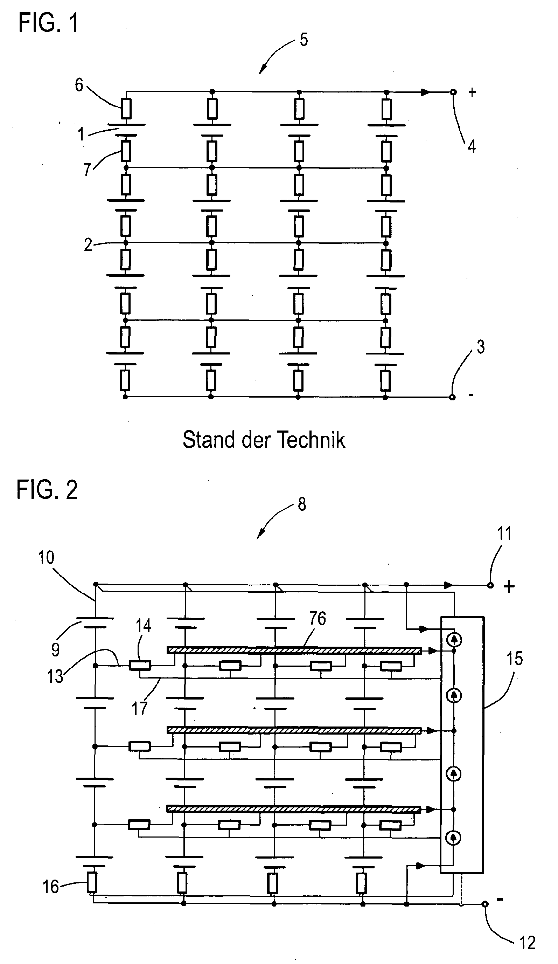

Fig. 1 zeigt ein Ersatzschaltbild der in der erwähnten Druckschrift beschriebenen Batterie. Man erkennt, dass Zellen 1 in mehreren parallelen Strängen 2 angeordnet sind, wobei jeder Strang 2 mit dem Minuspol 3 und dem Pluspol 4 einer Batterie 5 verbunden sind. Jede Zelle 1 wird durch zwei Bonddrähte vor einem zu großen Strom geschützt. Die Bonddrähte wirken wie Schmelzsicherungen, die bei einem Kurzschluss schmelzen, wodurch der Stromfluss in die defekte Zelle und eine Erwärmung verhindert werden. Wie in Fig. 1 gezeigt ist, sind jeder Zelle 1 zwei Sicherungen 6, 7 zugeordnet, die in dem Strang 2 vor und hinter der Zelle 1 angeordnet sind. Obwohl durch die in Fig. 1 gezeigte Schaltung ein guter Schutz vor Kurzschlüssen erzielt wird, wird es als nachteilig angesehen, dass der Gesamtwiderstand der Batterie 5 durch die Sicherungen 6, 7 vergrößert wird. Bei einer Batterie mit n parallelen Strängen und m Zellen pro Strang beträgt der zusätzliche Widerstand R_{F}'=2 R_{F} x m/n, wobei R_{F} der Widerstand einer Sicherung ist. Ein erhöhter Innenwiderstand ist jedoch unerwünscht, da er zu einem Spannungseinbruch beim Kaltstart führen kann.

Obwohl die in der US 2008/0241667 A1 beschriebene Batterie bereits einen guten Schutz gegenüber internen und externen Kurzschlüssen bietet, besteht Bedarf an einer Lithium-Ionen-Batterie, die eine bessere Diagnose einzelner Zellen ermöglicht.

Der Erfindung liegt daher die Aufgabe zugrunde, eine Lithium-Ionen-Batterie anzugeben, die erweiterte Diagnosemöglichkeiten aufweist.
Zur Lösung dieser Aufgabe ist eine Lithium-Ionen-Batterie mit den Merkmalen des Anspruchs 1 vorgesehen.
Die erfindungsgemäß vorgesehene elektronischen Schalter übernehmen die Funktion einer Überstromsicherung, um bei der Überschreitung eines Grenzwerts des in einem Querzweig fließenden Strom den Stromfluss wie eine Sicherung zu unterbrechen. Dabei ist es von Vorteil, dass die elektronischen Schalter primär in den Querzweigen angeordnet sind, in denen vergleichsweise niedrige Ströme fließen, verglichen mit den Strömen in den parallelen Strängen.

Die elektronischen Schalter sind bei der erfindungsgemäßen Lithium-Ionen-Batterie zwischen Knotenpunkten der sich kreuzenden Stränge und Querzweige in dem jeweiligen Querzweig angeordnet. Dadurch ergibt sich der Vorteil, dass der Innenwiderstand der Lithium-Ionen-Batterie lediglich geringfügig ansteigt, wodurch sich Vorteile beim Kaltstartverhalten ergeben.
Eine Weiterbildung der Erfindung sieht vor, dass einem elektronischen Schalter eine Vorrichtung zur Spannungsmessung zugeordnet ist. Der Schalter und die Vorrichtung zur Spannungsmessung bilden dadurch einen Schaltund Messknoten (SMK), der neben der Funktion als Solid-State-Relais (Schalter) auch eine Spannungsmessung durchführen kann. Der Spannungsmesswert kann einer Diagnose unterzogen werden, um Informationen über den Zustand der Lithium-Ionen-Batterie oder einzelner Zellen zu erhalten. Dazu wird der Strom vom Batteriemanagementsystem vorgegeben und anhand einer Spannungsmessung kann eine Diagnose erfolgen.
Die Erfindung sieht vor, dass ein elektronischer Schalter zwei Transistoren umfasst, vorzugsweise zwei Feldeffekttransistoren (FET). Vorzugsweise sind die Transistoren selbstsperrend, sodass die erfindungsgemäße LithiumIonen-Batterie bei ausgefallener Überstromschutzeinrichtung in einen sicheren Zustand versetzt wird. Es ist zweckmäßig, dass die als Sicherung dienenden Transistoren zusätzliche Funktionen aufweisen, besonders bevorzugt wird dabei eine programmierbare Überstromsicherung. Der Grenzwert des Stroms, bei dem die Transistoren schalten und eine Leitung unterbrechen, kann eingestellt werden.

Im Rahmen einer Weiterbildung der Erfindung kann es vorgesehen sein, dass die Transistoren an eine Signalleitung angeschlossen sind, um Statusinformationen an ein Batteriemanagementgerät zu übertragen. Alternativ oder zusätzlich können die Statusinformationen auch an ein Steuergerät übertragen werden. Es ist auch denkbar, dass das Batteriemanagementgerät die Statusinformationen auswertet und davon abgeleitete Informationen an ein Steuergerät überträgt.

Die erfindungsgemäße Lithium-Ionen-Batterie kann das bereits erwähnte Batteriemanagementgerät aufweisen, das zur Durchführung eines resistiven oder eines pulsierenden (aktiven) Ladungsausgleichs ausgebildet ist. Zweckmäßig sind die Querzweige an das Batteriemanagementgerät angeschlossen. Das Zusammenführen der Schalt- und Messknoten auf eine Stromschiene (Balancingschiene) bewirkt, dass die Lithium-Ionen-Batterie auch gut mithilfe eines aktiven pulsierenden Balancingverfahrens symmetriert werden können. Ein Beispiel für ein derartiges Verfahren ist das Flying-Capacitor-Verfahren.

Das Batteriemanagementgerät stellt sicher, dass ein Ladungsausgleich durchgeführt wird, sodass keine der Zellen überladen oder tiefentladen wird.

Zusätzlich kann es bei der erfindungsgemäßen Lithium-Ionen-Batterie vorgesehen sein, dass in wenigstens einem, vorzugsweise in allen parallelen Strängen ein elektronischer Schalter angeordnet ist, dem vorzugsweise eine Vorrichtung zur Spannungsmessung zugeordnet ist. Ein Schalter und die ihm zugeordnete Vorrichtung zur Spannungsmessung bilden einen Schalt- und Messknoten, der grundsätzlich wie ein in einem Querzweig angeordneter Schalt- und Messknoten ausgebildet ist. Die in den Querzweigen angeordneten Schalt- und Messknoten werden normalerweise mit kleinen Strömen belastet, sie können daher klein bzw. passend für eine niedrige Leistung ausgeführt sein, während die in den parallelen Strängen angeordneten Schalt- und Messknoten erst bei einem höheren Grenzwert auslösen.

Es liegt auch im Rahmen der Erfindung, dass die Lithium-Ionen-Batterie wenigstens eine Stromschiene aufweist, an die die elektronischen Schalter eines Querzweigs angeschlossen sind. Die Stromschiene, die vorzugsweise aus einem besonders gut leitenden Material wie Kupfer oder Aluminium besteht, verhindert, dass sich der Innenwiderstand erhöht. Dazu ist vorzugsweise jeder einzelne Schalter, insbesondere jeder Schalt- und Messknoten, direkt mit der Stromschiene verbunden. Die Stromschiene kann aus einem Platinenmaterial (Leiterplatte) bestehen.

Weitere Vorteile und Einzelheiten der Erfindung werden anhand von Ausführungsbeispielen unter Bezugnahme auf die Zeichnungen erläutert. Die Zeichnungen sind schematische Darstellungen und zeigen:
- Fig. 1: ein Schaltbild einer herkömmlichen Batterie mit einer Überstromschutzeinrichtung;
- Fig. 2: ein Schaltbild eines ersten Ausführungsbeispiels einer erfindungsgemäßen Lithium-Ionen-Batterie;
- Fig. 3: die Bestandteile eines Schalt- und Messknotens;
- Fig. 4: das in Fig. 2 gezeigte Schaltbild bei einem Kurzschluss;
- Fig. 5: ein weiteres Schaltbild einer erfindungsgemäßen Lithium-Ionen-Batterie;
- Fig. 6: eine perspektivische Ansicht einer erfindungsgemäßen Lithium-Ionen-Batterie;
- Fig. 7 und 8: eine Stromschiene einer erfindungsgemäßen Lithium-Ionen-Batterie; und
- Fig. 9 - 11: eine Balancingschiene einer erfindungsgemäßen Lithium-Ionen-Batterie.

Die in Fig. 2 gezeigte Lithium-Ionen-Batterie 8 besteht im Wesentlichen aus einer Mehrzahl von Lithium-Ionen-Zellen, die nachfolgend als Zellen 9 bezeichnet werden. Die Lithium-Ionen-Batterie 8 umfasst mehrere Stränge 10, in dem dargestellten Ausführungsbeispiel sind vier parallele Stränge 10 vorgesehen. Die Anzahl der Stränge kann jedoch variieren und ist nicht auf das dargestellte Ausführungsbeispiel beschränkt. Jeder Strang 10 umfasst mehrere in Reihe geschaltete Zellen 9, in dem dargestellten Ausführungsbeispiel umfasst jeder Strang 10 vier Zellen 9, auch diese Zahl kann variieren und ist nicht als Beschränkung zu verstehen. Die parallel geschalteten Zellen 9 bilden jeweils eine P-Gruppe, in der ein Ladungsausgleich möglich ist. Jeder Strang 10 der Zellen 9 ist einerseits mit dem Pluspol 11 und andererseits mit dem Minuspol 12 der Lithium-Ionen-Batterie 8 verbunden. Wie in Fig. 2 gezeigt ist, weist die Lithium-Ionen-Batterie 8 quer zu den parallelen Strängen 10 angeordnete Querzweige 13 auf, in denen elektronische Schalter vorgesehen sind. Da die Schalter einerseits eine Schaltfunktion wie ein Solid-State-Relais übernehmen und da ihnen jeweils eine Vorrichtung zur Spannungsmessung zugeordnet ist, wird die aus dem elektronischen Schalter und der Vorrichtung zur Spannungsmessung bestehende Schaltungsanordnung nachfolgend als Schalt- und Messknoten (SMK) 14 bezeichnet. Jeder Schaltund Messknoten wirkt wie eine Sicherung, die bei der Überschreitung eines Grenzwerts des Stroms in dem Querzweig 13 den Stromfluss unterbricht. Die Hauptstrompfade bildenden Stränge 10 und die in der schematischen Ansicht von Fig. 2 senkrecht dazu verlaufenden Querzweige 13 kreuzen sich in Knotenpunkten, zwischen Knotenpunkten ist in dem jeweiligen Querzweig 13 bzw. dem jeweiligen Abschnitt zwischen zwei benachbarten Knotenpunkten jeweils ein Schalt- und Messknoten vorgesehen.

Bestandteil der Lithium-Ionen-Batterie 8 ist ferner ein Batteriemanagementsystem 15, das mit den einzelnen Querzweigen 13 verbunden ist. Das Batteriemanagementsystem 15 bewirkt, dass die Zellen 9 gleichmäßig geladen oder entladen werden. Zusätzlich kann das Batteriemanagementsystem weitere Aufgaben erfüllen. Dadurch wird vermieden, dass keine Zelle überladen oder tiefentladen wird. In dem in Fig. 2 gezeigten Schaltbild erkennt man, dass jeweils Zellen 9 gleicher Spannungslage zusammengeschaltet sind. Auf diese Weise können sämtliche Zellen 9 der Lithium-Ionen-Batterie 8 mit einem einzigen Batteriemanagementsystem 15 überwacht werden. Die an einen Querzweig angeschlossenen Zellen gleichen durch ihre parallele Verschaltung eventuelle Ungleichheiten ihrer Ladung selbstständig aus.

Zusätzlich zu den in den Querzweigen 13 angeordneten Schalt- und Messknoten 14 ist ein Schalt- und Messknoten 16 in einem Strang 10 des Hauptstrompfads vorgesehen, ebenso in den anderen Hauptstrompfaden.

Falls in einer Zelle 9 oder außerhalb einer bestimmten Zelle ein Kurzschluss auftritt, bieten die Schalt- und Messknoten 14, 16 denselben Schutz vor internen und externen Kurzschlüssen wie die in der Batterie von Fig. 1 verwendeten Sicherungen. Allerdings erhöht sich der Innenwiderstand der Lithium-Ionen-Batterie 8 lediglich in geringem Maße, wodurch sich ein besseres Kaltstartverhalten ergibt. Der Schalt- und Messknoten 14 sowie weitere in dem Querzweig 13 angeordnete Schalt- und Messknoten sind an eine Stromschiene 76 angeschlossen. Die Stromschiene 76 bewirkt, dass im Balancingbetrieb des Batteriemanagementgeräts 15 keine Verkettung der Innenwiderstände der Schalt- und Messknoten entsteht. Eine derartige Verkettung von Innenwiderständen würde bei einem impulsförmigen (pulsierenden) Balancing Probleme verursachen. Die Stromschiene 76 führt somit zu einer gleichmäßigen Stromaufteilung.

Die Schalt- und Messknoten 16 in den Hauptstrompfaden werden mit höheren Strömen beaufschlagt als die Schalt- und Messknoten 14 in den Querzweigen. Die Schalt- und Messknoten 14 schalten bei einem kleineren Grenzwert für den Strom, wodurch sie öffnen und einen weiteren Stromfluss verhindern. Die Schalt- und Messknoten 14, 16 weisen Feldeffekttransistoren (FET) auf. Diese sind selbstsperrend, um die Lithium-Ionen-Batterie 8 bei einem Ausfall der Transistoren in einen sicheren Zustand zu versetzen.

Ein Beispiel für einen entsprechenden Feldeffekttransistor ist der Typ ZXMS6003G des Herstellers ZETEX. Ein derartiger Transistor eines Schaltund Messknotens 14, 16 kann auch als programmierbare Überstromsicherung eingesetzt werden. Die Transistoren liefern eine Statusmeldung, die über eine Signalleitung 17 an das Batteriemanagementgerät 15 übertragen wird. Die Statusmeldungen der einzelnen Schalt- und Messknoten 14, 16 werden dort zentral ausgewertet.

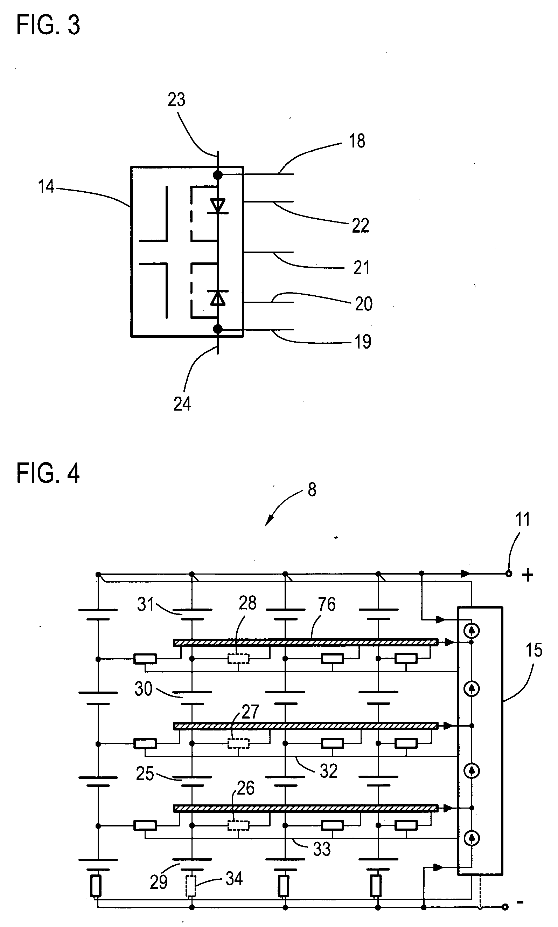

Fig. 3 zeigt schematisch einen Schalt- und Messknoten 14 in einer vergrößerten Ansicht. Dort erkennt man die aus dem Schalt- und Messknoten 14 zu dem Batteriemanagementgerät 15 herausgeführten Anschlüsse. Die Signalleitung 17 umfasst Spannungsmessleitungen 18, 19, um eine Messung der Spannungen der Zellen 9 durchzuführen. Dazu werden die von mehreren Schalt- und Messknoten 14 gemessenen Spannungen über die Signalleitung 17 an das Batteriemanagementgerät 15 übertragen und ausgewertet. Eine Leitung 20 ist an die Source des Transistors angeschlossen, es handelt sich dabei um das Bezugspotential einer Steuerleitung 21. Eine Leitung 22 (Status) ist ein Ausgang, der Aufschluss über den Zustand des jeweiligen Schaltund Messknotens gibt. Eine Leitung 23 (Drain) und eine Leitung 24 (Drain 2) bilden den Strompfad, über den der Strom fließt. Im Normalzustand ist der Schalt- und Messknoten 14 "geschlossen", also elektrisch leitend, daher ist ein gegenseitiger Ladungsausgleich zwischen parallel geschalteten Zellen 9 möglich.

Fig. 4 ist eine ähnliche Darstellung wie Fig. 3 und zeigt die Lithium-IonenBatterie 8. Auf eine Wiederholung derjenigen Komponenten, die bereits im Zusammenhang mit Fig. 2 erläutert wurden, wird daher an dieser Stelle verzichtet. Fig. 4 zeigt einen Störfall, bei dem eine Zelle 25 kurzgeschlossen worden ist. Ein derartiger Kurzschluss kann zum Beispiel durch ein Stück Metall verursacht werden, das in den Zellkorpus hineingedrückt worden ist.

In diesem Fall würden die benachbarten Schalt- und Messknoten 26, 27 und 28 auslösen. Da diese Schalt- und Messknoten wie Sicherungen wirken, die nach dem Auslösen eine Leitung unterbrechen, sind die Schalt- und Messknoten 26, 27, 28 in Fig. 4 gestrichelt dargestellt.

Wenn jedoch in einem derartigen Störfall der Schalt- und Messknoten 34 beispielsweise aufgrund von fertigungsbedingten Streuungen der Bauteileigenschaften oder aufgrund eines Temperaturgradienten innerhalb der Lithium-lonen-Batterie 8 nicht auslösen würde, so lägen die Zellen 29, 30 und 31 an einer erhöhten Spannung, jede der drei Zellen 29, 30, 31 würde dadurch eine um den Faktor 1/3 zu hohe Spannung erfahren und überladen. Diese Überladung kann bei bestimmten Lithiumzellen zu einer Zerstörung führen.

Die Lithium-Ionen-Batterie 8 weist daher die Schalt- und Messknoten 27 und 26 auf, deren Transistoren jeweils den Überstrom erkennen und die Schaltund Messknoten 26, 27 öffnen. Über Signalleitungen 32, 33 melden die Schalt- und Messknoten 26, 27 die Auslösung an das Batteriemanagementgerät 15, welches dann die Schalt- und Messknoten 34 und 28 öffnet, um die Zelle 25 potentialfrei zu schalten.

Wenn am Batteriemanagementgerät 15 ein Störfall vorliegen würde und falls über den Schalt- und Messknoten 34 ein Strom fließen würde, der die festgelegte, programmierte Auslöseschwelle erreicht, so würde der Schalt- und Messknoten 34 auch ohne einen Befehl des Batteriemanagementgeräts 15 öffnen und die Zelle 25 potentialfrei schalten, was zu einer erhöhten Zuverlässigkeit und einer Erhöhung der System-Redundanz führt. Die programmierten Überstromauslöseschwellen sind präziser als die üblicherweise streuenden Auslöseschwellen von Schmelzsicherungen. Dadurch erhöht sich die Zuverlässigkeit und die Vorhersagbarkeit des Systemverhaltens im Störfall, in beiden Fällen kann die Lithium-Ionen-Batterie 8 weiter benutzt werden, da die freigeschaltete Zelle 25 keinen Einfluss mehr auf das Gesamtsystem hat.

Nachfolgend wird ein weiterer Störfall beschrieben. Es wird angenommen, dass die Zelle 25 eine alterungsbedingte erhöhte Selbstentladung aufweist. In der Folge würden die zu der Zelle 25 parallelen Zellen sich über die Zelle 25 entladen. Das Batteriemanagementendgerät 15 stellt dann jedoch eine erhöhte Selbstentladung der Gruppe der Zellen fest, in der sich die Zelle 25 befindet. Über die Schalt- und Messknoten 26, 27 fließt ein Ausgleichsstrom von den zur Zelle 25 parallelen Zellen. Die ohmschen Widerstände aller Schalt- und Messknoten sind bekannt und über deren Spannungsanschlüsse (Spannungsmessleitungen 18, 19) kann die Spannung über den jeweiligen Schalt- und Messknoten bestimmt werden. Aus der Polarität dieser Spannungen kann auch die Stromflussrichtung über alle Schalt- und Messknoten bestimmt werden. Durch eine Plausibilisierung kann festgestellt werden, dass in dem betrachteten Fehlerfall die Ausgleichsströme von den zur Zelle 25 parallelen Zellen wegführen und zur Zelle 25 hinführen. Dadurch kann festgestellt werden, dass die Zelle 25 eine erhöhte Selbstentladung aufweist.

Die Lithium-Ionen-Batterie 8 kann trotz des Störfalls weiter verwendet werden, da sich der Strang, in dem sich die defekte Zelle 25 befindet, über die Schalt- und Messknoten 35, 36, 28 und 34 potentialfrei geschaltet wird.

Die matrixartige Anordnung bzw. Verschaltung der einzelnen Zellen ermöglicht eine Adressierung einzelner Zellen, ohne dass die Batterie während einer Adressierung nicht mehr nutzbar ist.

Anstelle von zwei Schaltern pro Zelle und zwei Schaltern pro Zellstrang wird lediglich ein einziger Schalt- und Messknoten pro Zelle verwendet, zudem liegt eine Parallelschaltung der Zellen einer P-Gruppe vor, wodurch ein impliziter Ladungsausgleich zwischen den Zellen einer P-Gruppe stattfindet. Durch die Adressierbarkeit aller Zellen ist es möglich, eine Diagnose an jede einzelnen Zelle durchzuführen.

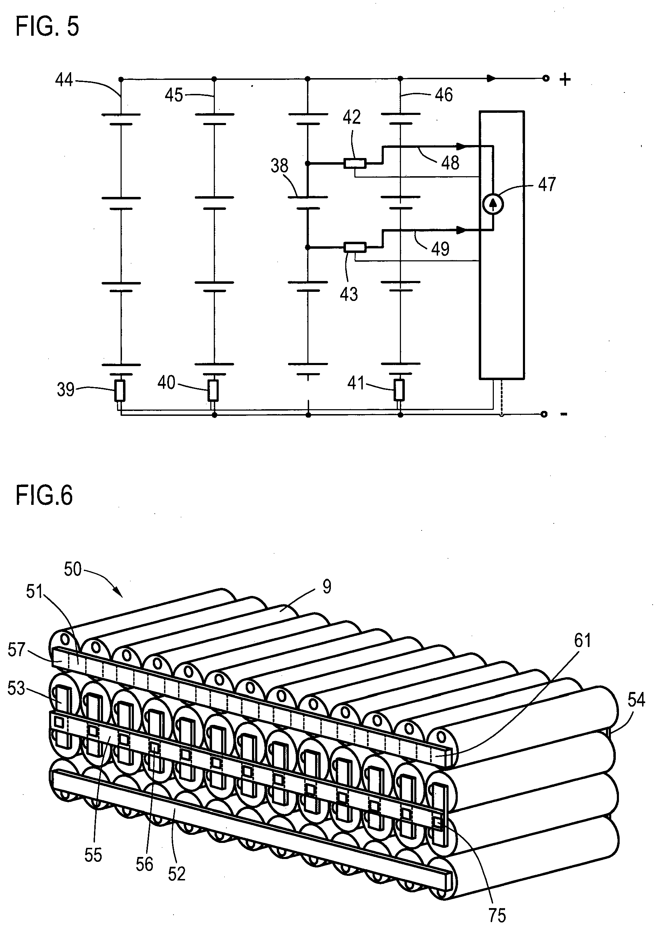

In Fig. 5 wird dargestellt, wie eine bestimmte Zelle 38 adressiert und gleichzeitig diagnostiziert werden kann.

In Fig. 5 sind alle Schalt- und Messknoten geöffnet, abgesehen von den Schalt- und Messknoten 39, 40, 41, 42, 43. Wegen der besseren Übersichtlichkeit wurden in Fig. 5 alle nicht eingeschalteten (geöffneten) Schalt- und Messknoten weggelassen, ebenso sind lediglich relevante Signalleitungen dargestellt.

Die seriellen Stränge 44, 45, 46 bleiben weiterhin mit dem Bordnetz eines Fahrzeugs verbunden. Eine Stromquelle 47 kann nun Ströme in beliebiger Form in die Zelle 38 einprägen und über Signalleitungen 48, 49 wird die Spannungsantwort auf den eingeprägten Strom gemessen und vom Batteriemanagementgerät 15 ausgewertet. Auf diese Weise kann beispielsweise eine elektrochemische Impedanzspektroskopie an der Zelle durchgeführt werden. Ebenso kann deren momentane Kapazität oder deren Gleichstromwiderstand bestimmt werden. Dadurch ergeben sich vielfältige Diagnosemöglichkeiten, die an jeder Zelle der Lithium-Ionen-Batterie während des Betriebs der Batterie durchgeführt werden können. Diese Informationen können auch zur Kalibrierung eines Ladezustandsalgorithmus oder zur Bestimmung des Gesundheitszustands (SOH) genutzt werden.

Fig. 6 zeigt ein Ausführungsbeispiel einer Lithium-Ionen-Batterie 50, die aus zehn Gruppen parallel geschalteter Zellen besteht, wobei jeweils vier Zellen in einer Reihe geschaltet sind. Zellen 9 gleicher Polarität bilden eine Reihe, insgesamt sind vier derartiger Reihen vorgesehen. Vier Reihen von Zellen sind bei LiFePO₄-Zellen zweckmäßig. Das Vorsehen von vier Reihen ist jedoch nicht als Beschränkung zu verstehen, insbesondere können auch mehr als vier Reihen von Zellen vorgesehen sein, zusätzlich ist das in Fig. 6 gezeigte Ausführungsbeispiel auch auf Hochvoltsysteme übertragbar. Auf den Polen der Zellen 9 ist eine Stromschiene 51 angebracht, die ein Bündel von Signalleitungen 57 umfasst. Eine weitere Stromschiene 52 verbindet die untere Potentialebene der untersten P-Gruppe miteinander. Eine Serienschaltung ist durch Zellverbinder 53, 54 gewährleistet, indem die entsprechenden Pole der Zellen mittels der Zellverbinder 53, 54 verbunden werden. Quer zu den Zellverbindern 53 ist eine weitere Stromschiene angebracht, die als Balancingschiene 55 dient. An den Kontaktpunkten zwischen der Balancingschiene 55 und den Zellverbindern 53 befindet sich jeweils ein Schalt- und Messknoten 56.

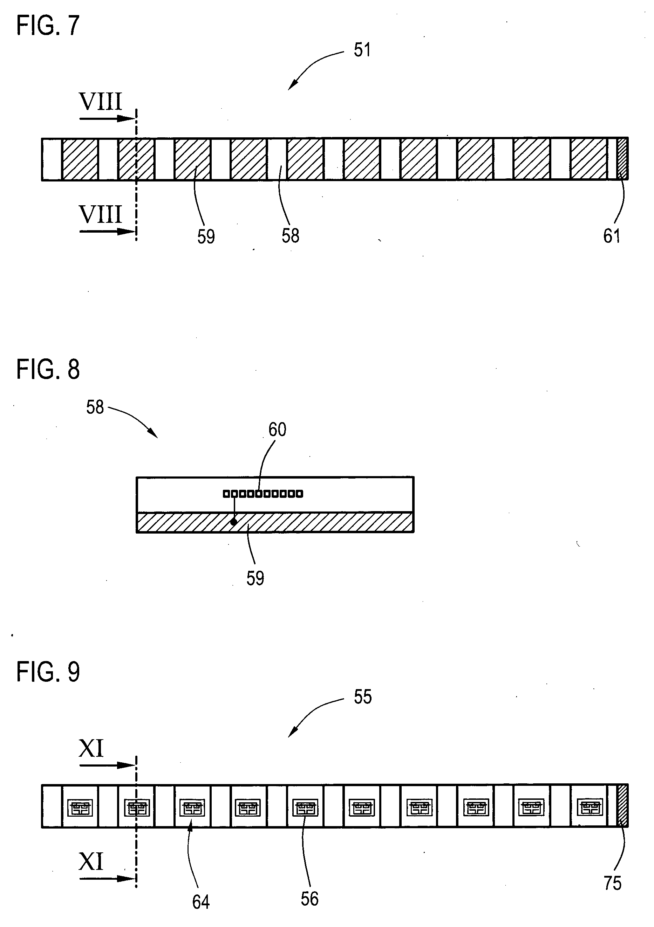

Fig. 7 zeigt die den Batteriezellpolen zugewandte Seite der Stromschiene 51, die als Leiterplatte 58 ausgebildet ist, auf der sich die Signalleitungen 57 befinden. Die Länge der Leiterplatte 58 entspricht im Wesentlichen der Länge der P-Gruppe der Lithium-Ionen-Batterie 50 von Fig. 6. An den Stellen, an denen sich Batteriezellpole befinden, ist die Leiterplatte 58 mit einer Metallschicht 59 versehen.

Fig. 8 ist eine geschnittene Ansicht von Fig. 7 entlang der Linie VIII-VIII. Im Inneren der mehrlagigen Leiterplatte 58 befinden sich Kupferbahnen, die zur elektrischen Signalweiterleitung dienen. Die Kupferbahnen 60 sind in Fig. 8 gezeigt. Von der Metallschicht 59 führt eine elektrisch leitende Verbindung zu den Kupferbahnen 60 im Inneren der Leiterplatte 58. In dem in den Fig. 7 und 8 dargestellten Ausführungsbeispiel ist die in der zweiten Zelle von links zugeordnete Metallschicht 59 dargestellt, daher wird diese auch elektrisch mit der zweiten Kupferbahn 60 von links im Inneren der Leiterplatte 58 verbunden.

Die Metallschichten 59 werden elektrisch leitend mit den Zellpolen verbunden. Obwohl die Metallschichten in dem dargestellten Ausführungsbeispiel aus Kupfer bestehen, sind auch andere Werkstoffe denkbar, insbesondere können die Metallschichten aus demselben Werkstoff wie die Zellpole bestehen. In diesem Fall kann eine stoffschlüssige Verbindung einfach realisiert werden, beispielsweise durch ein Schweißverfahren oder ein Lötverfahren.

Die über die Metallschichten 59 gemessenen Zellpotentiale werden über die im Inneren der Leiterplatte 58 angeordneten Kupferbahnen 60 zu einem Kontaktierungspunkt 61 geführt, über den die Signale dann über einen Stecker an das Batteriemanagementgerät 15 weitergeleitet werden können. Der Kontaktierungspunkt 61 ist auch in Fig. 6 gezeigt.

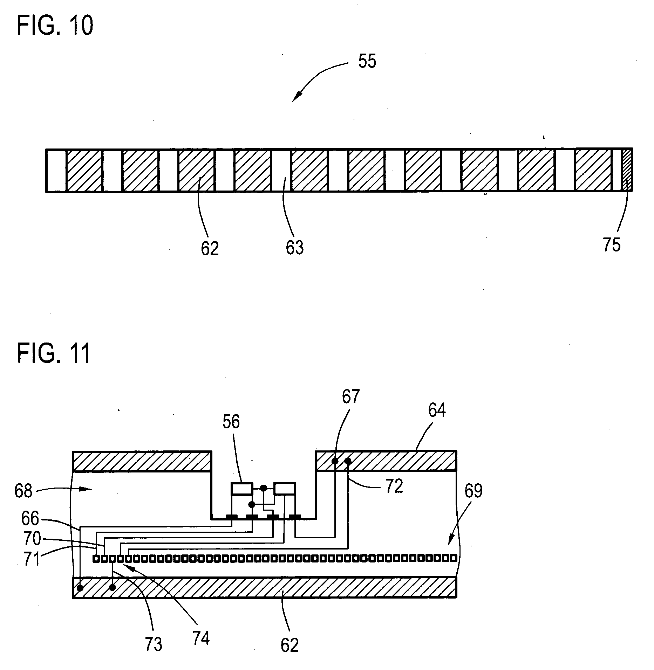

Fig. 9 zeigt die den Zellen abgewandte Seite der Balancingschiene 55, in Fig. 10 ist die den Zellen zugewandte Seite der Balancingschiene 55 dargestellt. In Fig. 11 ist ein Schnitt entlang der Linie XI-XI in Fig. 9 dargestellt. Die Balancingschiene 55 ist als Leiterplatte ausgebildet, vorzugsweise wird eine flexible Leiterplatte verwendet.

An der in Fig. 10 gezeigten, den Zellen zugewandten Seite der Balancingschiene 55 sind Metallflächen 62 aufgebracht, die eine stoffschlüssige und elektrisch leitende Verbindung zwischen der Leiterplatte und den Zellpolen dient. Die Metallflächen 62 werden durch nichtleitende Flächen 63 der Balancingschiene 55 aus Leiterplattenbasismaterial unterbrochen.

Die in Fig. 9 gezeigte den Zellen abgewandte Seite der Balancingschiene 55 weist eine durchgehende Metallschicht 64 auf, in die Schalt- und Messknoten 65 eingelassen sind, und zwar jeweils an den Stellen, an denen sich eine Metallfläche 62 an der anderen Seite der Balancingschiene 55 befindet.

In Fig. 11 ist ein Schnitt entlang der Linie XI-XI von Fig. 9 durch die Balancingschiene 55 gezeigt. An dieser Stelle befindet sich der Schalt- und Messknoten 56. Der Schalt- und Messknoten 56 ist prinzipiell mit einem Schalter vergleichbar. Bei eingeschaltetem (leitendem) Schalt- und Messknoten 56 werden die Metallfläche 62 und die Metallschicht 64 über die in der als Leiterplatte ausgebildeten Balancingschiene 55 eingelassenen elektrischen Leiterbahnen 66, 67 elektrisch miteinander verbunden. Bezugszeichen 68 bezeichnet das Platinengrundmaterial.

Über die in die mehrlagige Balancingschiene 55 eingelassenen Leiterbahnen 69 werden Leitungen 70, 71, die zur Ansteuerung des Schalt- und Messknotens 65 dienen, elektrisch mit dem Batteriemanagementgerät 15 verbunden. Über Leitungen 72, 73 gelangt die an der Metallfläche 62 und der Metallschicht 64 anliegende Spannung über die inneren Leiterbahnen zum Batteriemanagementgerät. Eine weitere Leitung 74 führt das Statussignal des Schalt- und Messknotens 56 über die inneren Leiterbahnen zum Batteriemanagementgerät 15.

Am Kontaktierungspunkt 75 können alle Signale der inneren Leiterbahnen 69 ausgekoppelt und zum Batteriemanagementgerät 15 geführt werden. Der Kontaktierungspunkt 75 ist auch in Fig. 6 dargestellt.

## Patentansprüche

1. Lithium-Ionen-Batterie (8), insbesondere für ein Fahrzeug, mit einer Mehrzahl von in parallelen Strängen (10) angeordneten Zellen (9, 25, 29, 30, 31, 38), wobei jeder Strang (10) mehrere Zellen (9, 25, 29, 30, 31, 38) aufweist, sowie einer Überstromschutzeinrichtung, die bei einem festgelegten Strom schaltende elektronische Schalter umfasst, die in quer zu den parallelen Strängen (10) verlaufenden Querzweigen (13) angeordnet sind, wobei die Zellen (9, 25, 29, 30, 31, 38) matrixartig angeordnet sind und die Querzweige (13) die parallelen Stränge (10) jeweils an einem Knotenpunkt zwischen zwei Zellen (9, 25, 29, 30, 31, 38) des jeweiligen Strangs (10) kontaktieren,
**dadurch gekennzeichnet,**
**dass** ein elektronischer Schalter zwei Transistoren umfasst.

2. Lithium-Ionen-Batterie nach Anspruch 1,
**dadurch gekennzeichnet,**
**dass** der elektronische Schalter zwischen Knotenpunkten der sich kreuzenden Stränge (10) und Querzweige (13) in dem jeweiligen Querzweig (13) angeordnet ist.

3. Lithium-Ionen-Batterie nach Anspruch 1 oder 2,
**dadurch gekennzeichnet,**
**dass** einem elektronischen Schalter eine Vorrichtung zur Spannungsmessung zugeordnet ist.

4. Lithium-Ionen-Batterie nach einem der vorangehenden Ansprüche, **dadurch gekennzeichnet dass** die Transistoren als Feldeffekttransistoren ausgebildet sind.

5. Lithium-Ionen-Batterie nach einem der vorangehenden Ansprüche,
**dadurch gekennzeichnet,**
**dass** die Transistoren selbstsperrend sind.

6. Lithium-Ionen-Batterie nach einem der vorangehenden Ansprüche,
**dadurch gekennzeichnet,**
**dass** die Transistoren an eine Signalleitung (17, 32, 33) angeschlossen sind, um Statusinformationen an ein Batteriemanagementgerät (15) zu übertragen.

7. Lithium-Ionen-Batterie nach einem der vorangehenden Ansprüche,
**dadurch gekennzeichnet,**
**dass** die Querzweige (13) an das oder ein Batteriemanagementgerät (15) angeschlossen sind, das zur Durchführung eines resistiven oder eines aktiven Ladungsausgleichs ausgebildet ist.

8. Lithium-Ionen-Batterie nach einem der vorangehenden Ansprüche,
**dadurch gekennzeichnet,**
**dass** in wenigstens einem Strang, vorzugsweise in allen parallelen Strängen (10) ein elektronischer Schalter angeordnet ist, dem vorzugsweise eine Vorrichtung zur Spannungsmessung zugeordnet ist.

9. Lithium-Ionen-Batterie nach Anspruch 8,
**dadurch gekennzeichnet,**
**dass** der elektronische Schalter an eine Signalleitung angeschlossen ist, um Statusinformationen an ein oder das Batteriemanagementsystem (15) zu übertragen.

10. Lithium-Ionen-Batterie nach einem der vorangehenden Ansprüche,
**dadurch gekennzeichnet,**
**dass** sie wenigstens eine Stromschiene (76) aufweist, an die die elektronischen Schalter eines Querzweigs (13) angeschlossen sind.

## Claims

1. Lithium-ion battery (8), in particular for a vehicle, with a majority of cells (9, 25, 29, 30, 31, 38) disposed in parallel branches (10), wherein each branch (10) has several cells (9, 25, 29, 30, 31, 38), as well as an overcurrent protection device, which comprises electronic switches which switch at a defined current and are disposed in cross-branches (13) running perpendicular to the parallel branches (10), wherein the cells (9, 25, 29, 30, 31, 38) are disposed matrixlike and the cross-branches (13) contact the parallel branches (10) in each case at a junction between two cells (9, 25, 29, 30, 31, 38) of the particular branch (10), **characterised in that**
an electronic switch comprises two transistors.

2. Lithium-ion battery according to claim 1, **characterised in that** the electronic switch between junctions of the intercrossing branches (10) and cross-branches (13) is disposed in the particular cross-branch (13).

3. Lithium-ion battery according to claim 1 or 2, **characterised in that** a device for measuring voltage is assigned to an electronic switch.

4. Lithium-ion battery according to one of the preceding claims, **characterised in that** the transistors are designed as field-effect transistors.

5. Lithium-ion battery according to one of the preceding claims, **characterised in that** the transistors are selfblocking.

6. Lithium-ion battery according to one of the preceding claims, **characterised in that** the transistors are connected to a signal line (17, 32, 33), in order to transmit status information to a battery management system (15).

7. Lithium-ion battery according to one of the preceding claims, **characterised in that** the cross-branches (13) are connected to the or a battery management system (15), which is designed to perform resistive or active charge balancing.

8. Lithium-ion battery according to one of the preceding claims, **characterised in that** there is disposed in at least one branch, preferably in all parallel branches (10), an electronic switch, to which preferably a device for measuring voltage is assigned.

9. Lithium-ion battery according to claim 8, **characterised in that** the electronic switch is connected to a signal line, in order to transmit status information to one or the battery management system (15).

10. Lithium-ion battery according to one of the preceding claims, **characterised in that** it has at least one bus bar (76), to which the electronic switches of a cross-branch (13) are connected.

## Revendications

1. Batterie lithium-ion (8), destinée en particulier à un véhicule, comprenant une multitude de cellules (9, 25, 29, 30, 31, 38) disposées en des lignes (10) parallèles, dans laquelle chaque ligne (10) présente plusieurs cellules (9, 25, 29, 30, 31, 38), comprenant également un dispositif de protection contre les surintensités, qui comprend des commutateurs électroniques commutant en présence d'un courant déterminé, lesquels sont disposés dans des branches transversales (13) s'étendant de manière transversale par rapport aux lignes (10) parallèles, dans laquelle les cellules (9, 25, 29, 30, 31, 38) sont disposées à la manière d'une matrice et les branches transversales (13) établissent un contact avec les lignes (10) parallèles respectivement au niveau d'un point formant un noeud entre deux cellules (9, 25, 29, 30, 31, 38) de la ligne (10) respective,
**caractérisée en ce**
**qu'**un commutateur électronique comprend deux transistors.

2. Batterie lithium-ion selon la revendication 1,
**caractérisée en ce**
**que** le commutateur électronique est disposé entre des points formant des noeuds des lignes (10) et des branches transversales (13) se croisant dans la branche transversale (13) respective.

3. Batterie lithium-ion selon la revendication 1 ou 2,
**caractérisée en ce**
**qu'**un dispositif servant à mesurer la tension est associé à un commutateur électronique.

4. Batterie lithium-ion selon l'une quelconque des revendications précédentes, **caractérisée en ce que** les transistors sont réalisés sous la forme de transistors à effet de champ.

5. Batterie lithium-ion selon l'une quelconque des revendications précédentes,
**caractérisée en ce**
**que** les transistors sont autobloquants.

6. Batterie lithium-ion selon l'une quelconque des revendications précédentes,
**caractérisée en ce**
**que** les transistors sont raccordés à une ligne de signal (17, 32, 33), afin de transmettre des informations de statut à un appareil de gestion de batterie (15).

7. Batterie lithium-ion selon l'une quelconque des revendications précédentes,
**caractérisée en ce**
**que** les branches transversales (13) sont raccordées à l'appareil de gestion de batterie ou à un appareil de gestion de batterie (15), lequel est réalisé afin de mettre en oeuvre une compensation de charge résistive ou active.

8. Batterie lithium-ion selon l'une quelconque des revendications précédentes,
**caractérisée en ce**
**qu'**un commutateur électronique est disposé dans au moins une ligne, de préférence dans toutes les lignes (10) parallèles, auquel un dispositif servant à mesurer la tension est de préférence associé.

9. Batterie lithium-ion selon la revendication 8,
**caractérisée en ce**
**que** le commutateur électronique est raccordé à une ligne de signal afin de transmettre des informations de statut à un ou au système de gestion de batterie (15).

10. Batterie lithium-ion selon l'une quelconque des revendications précédentes,
**caractérisée en ce**
**qu'**elle présente au moins un rail conducteur (76), auquel les commutateurs électroniques d'une branche transversale (13) sont raccordés.
